# EUROPÄISCHE PATENTSCHRIFT

(11) **EP 2 418 451 B1**
(45) Veröffentlichungstag und Bekanntmachung des Hinweises auf die Patenterteilung: **18.10.2017**
(21) Anmeldenummer: 11175696.1
(22) Anmeldetag: 28.07.2011
(51) Int. Cl.: F28F 9/00, F28D 1/04, F02B 29/04

(54) **Anordnung umfassend einen Wärmeübertrager, eine weitere Komponente und eine Modulhalterung**
Arrangement comprising a heat exchanger, another component and a module holder
Agencement comprenant un échangeur de chaleur, un autre composant et un support de module

(30) Priorität: 13.08.2010 DE 102010039311
(43) Veröffentlichungstag der Anmeldung: 15.02.2012
(73) Patentinhaber: MAHLE Behr GmbH & Co. KG, 70469 Stuttgart (DE)
(72) Erfinder: Heine, Reinhard, 71397 Leutenbach (DE)
(74) Vertreter: Grauel, Andreas

(56) Entgegenhaltungen:
- EP-A2- 1 939 575
- WO-A1-03/069251
- DE-A1-102004 023 912
- DE-B4- 19 964 455
- DE-U1- 29 712 351
- DE-U1-202006 000 499
- FR-A1- 2 792 974
- FR-A1- 2 929 386
- JP-A- 2005 186 780

## Beschreibung

Die Erfindung betrifft eine Anordnung umfassend einen Wärmeübertrager, eine weitere Komponente, insbesondere ein weiterer Wärmeübertrager, und eine Modulhalterung, wobei der Wärmeübertrager mit der weiteren Komponente über die Modulhalterung verbunden ist. In Kraftfahrzeugen dienen Wärmeübertrager häufig als Modulträger, Ist als Modulträger ein Kühlmitielkühler ausgewählt, wird an diesen ein Ladeluftkühler befestigt. Aus der DE 199 64 455 B4 ist eine Anordnung zur gegenseitigen Verbindung von zwei Wärmeübertragern dargestellt, bei dem der Ladeluftkühler dem Kühlmittelkühler vorgeschaltet ist. Dabei erstreckt sich die Wärmeübertragungsfläche des Ladeluftkühlers über die gesamte Breite des Kühlmittelkühlers und über etwa ein Drittel der Höhe des Kühlmittelkühlers. Die Befestigungseinrichtung zwischen Kühlmittelkühler und Ladeluftkühler ist dabei direkt an der Seite des Kühlmittelkühlers vorgesehen. Dies führt dazu, dass die Ladeluftstutzen zeitlich am Kühlmittelkühler vorbeigeführt werden müssen. Da dadurch die Ladeluftkästen des Ladeluftkühlers sehr hoch aus-gebildet werden müssen, erhöhen sich die Werkstoffkosten und die Ansprüche an Festigkeit und Bauraum der Ladeluftkühler bzw. des Kühlmittelkühlers.

Da der Ladeluftlühler durch die durch ihn strömende Ladeluft einem hohen Druck ausgesetzt ist, findet eine Belastung des Kühlmittelkühlers, insbesondere dessen Rohr/Bodenverbindung, durch den Ladeluftkühler statt. Die Druckkräfte werden vom Ladeluftkühler auf den Kühlmittelkühler übertragen, was die Stabilität des Kühlmittelkühlers beeinträchtigt. Aus der DE 297 12 351 ist auch eine Anordnung zur gegenseitigen Verbindung von zwei Wärmeübertragern bekannt. Der Erfindung liegt dabei die Aufgabe zugrunde, eine Anordnung umfassend einen Wärmeübertrager und eine weitere Komponente anzugeben, wobei der Wärmeübertrager mit der weiteren Komponente verbunden ist, bei welcher eine Belastung des Wärmeübertragers weitgehend unterbunden wird und die weitere Komponente einfach an dem Wärmeübertrager zu montieren bzw. zu demontieren ist.

Erfindungsgemäß wird die Aufgabe dadurch gelöst, dass die am Wärmeübertrager angeordnete Modulhalterung vom Wärmeübertrager weggerichtet ausgebildet ist. Dies hat den Vorteil, dass die weitere Komponente an der Modulhalterung so arretiert ist, dass sie unterhalb des Wärmeübertragers angeordnet ist. Insbesondere bei der Verwendung eines Ladeluftkühlers als weitere Komponente wird durch die zum Wärmeübertrager beabstandete Anordnung der Modulhalterung sichergestellt, dass die Kräfte, welche durch den Druck der Ladeluft auf den Ladeluftkühler in Fahrtrichtung direkt wirken, in die Modulhalterung eingeleitet werden. Dadurch wird der Wärmeübertrager entweder nur gering oder gar nicht belastet Diese Lösung führt außerdem zu einer Verringerung der Werkstoffkosten sowie zu einer Vereinfachung der Werkzeuge zur Herstellung der Anordnung. Der im Kraftfahrzeug vorzuhaltende Bauraum wird dadurch reduziert. Die Modulhalterung ist als Vorsprung des Wärmeübertragers ausgebildet, wobei der den Wärmeübertrager überragende Vorsprung in eine, an der weiteren Komponente ausgebildeten Aufnahme eingreift. Dadurch wird gewährleistet, dass die Modulhalterung zwischen dem Wärmeübertrager und der weiteren Komponente positioniert ist. Die Aufnahme der weiteren Komponente umfasst den Vorsprung mit mindestens zwei hakenähnlichen Elementen. Dies ermöglicht eine einfache Montage bzw. Demontage des Wärmeübertragers und der zusätzlichen Komponente, beispielsweise durch eine Clipsverbindung. Auf die Verwendung von Zusatzteilen kann dabei verzichtet werden. Aufgrund dieser Verbindung muss die weitere Komponente in ihren räumlichen Abmessungen nicht an die Abmaße der Anordnung zur Verbindung des Wärmetauschers mit der weiteren Komponente angepasst werden. Dadurch verringert sich der notwendige Bauraum für den Einbau in ein Kraftfahrzeug. Die weitere Komponente ist durch die mindestens zwei hakenähnlichen Elemente direkt vor und in dem Vorsprung in Wirkrichtung von, auf die weitere Komponente wirkenden Kräften befestigt. Ist die weitere Komponente als Ladeluftkühler ausgebildet, wird dieser über die hakenähnlichen Elemente direkt vor und hinter einem Modullager in Wirkrichtung der Ladeluftkräfte arretiert. Das erste hakenähnliche Element ist starr ausgebildet und liegt an einer Seite des Vorsprungs an. Somit bildet dieses starre Element eine Führung bei dem Zusammenschluss des Vorsprunges des Wärmeübertragers mit der Aufnahme der weiteren Komponente,

Ferner ist das erste hakenähnliche Element mittels einer, sich in seiner Längserstreckung ausdehnenden Rippe stabilisiert. Dadurch ist gewährleistet, dass sich beim Einführen des Vorsprungs in die Aufnahme der weiteren Komponente sich das erste hakenähnliche Element nicht verbiegt, sondern seine Position beibehält, was das Einführen des Vorsprunges in die Aufnahme unterstützt.

Das zweite hakenähnliche Element ist elastisch ausgebildet, welches eine an dem Vorsprung des Wärmeübertragers ausgebildete Querrippe annähernd umfasst. Beim Einführen des Vorsprungs in die Aufnahme wird das zweite hakenähnliche Element dabei leicht von dem Vorsprung beiseite gedrückt, damit sich der Vorsprung besser in der Aufnahme positionieren kann. Nachdem der Vorsprung seine Position in der Aufnahme erreicht hat, schnappt das zweite hakenähnliche Element über die Querrippe des Vorsprunges und bildet somit eine zuverlässige und feste Verbindung. Das zweite hakenähnliche Element ist dabei auf einer, dem ersten hakenähnlichen Element entgegengesetzten Seite des Vorsprungs angeordnet. Durch die Kombination des ersten festen und des zweiten elastischen hakenähnlichen Elementes wird ein Fest- und Loslagerkonzept verwirklicht, wobei das Loslager einen Toleranzausgleich bei der Einpassung des Vorsprungs ermöglicht.

Vorteilhafterweise weist der Vorsprung eine Ausnehmung auf, in welche ein Modullager, vorzugsweise formschlüssig, eingreift. Mittels dieses Modullagers wird eine Vorrichtung geschaffen, welche eine Montage bzw. eine Demontage des Wärmeübertragers am Fahrzeug selbst erlaubt.

In einer anderen Ausführungsform nimmt das Modullager, welches vorzugsweise als Gummielement ausgebildet ist, einen zur Verbindung mit einer Fahrzeugbefestigung dienenden Kunststoffhalter auf. Mit der Verwendung des Kunststoffhalters wird ein besonders kostengünstiges Bauelement eingesetzt, welches einfach herstellbar und flexibel in seiner Gestalt anzupassen ist. Dadurch reduzieren sich die Herstellungskosten für die Anordnung zur Verbindung eines Wärmeübertragers mit einer weiteren Komponente.

Die Nutzung eines Gummielementes als Modullager hat den Vorteil, dass die Vibrationen des Fahrzeugmotors nicht auf den Wärmeübertrager übertragen werden.

In einer Weiterbildung weist der Kunststoffhalter Mittel zum Verschrauben oder Verclipsen mit der Fahrzeugbefestigung auf. Beim Verschrauben oder Verclipsen des Kunststoffhalters mit der Fahrzeugbefestigung handelt es sich um besonders einfache Verbindungsarten, die in der Produktion des Kraftfahrzeuges sehr schnell zu realisieren sind.

In einer Ausgestaltung weist der Kunststoffhalter zur Ausführung der Schraubverbindung ein Langloch auf. Mittels dieses Langloches werden Toleranzen quer zur Fahrtrichtung ausgeglichen.

Die Erfindung lässt verschiedene Ausführungsformen zu. Eine davon soll anhand der in der Zeichnung dargestellten Figuren näher erläutert werden.

Es zeigt:
- Figur 1:: Darstellung der Lagerung eines Kühlmittelkühlers und eines Ladeluftkühlers.
- Figur 2:: Aufbau der Modulhalterung
- Figur 3:: Darstellung des Modullagers
- Figur 4:: Darstellung der Fixierung des Ladeluftkühlers an einer ersten Modulhalterung des Kühlmitteikühlers
- Figur 5:: Darstellung der Fixierung des Ladeluftkühlers an einer zweiten Modulhalterung des Kühlmittelkühlers
- Figur 6:: Darstellung einer zweiten Fixierungsmöglichkeit des Ladeluftkühlers an der ersten Modulhalterung
- Figur 7:: Darstellung der zweiten Fixierungsmöglichkeit des Ladeluftkühlers an der zweiten Modulhalterung.

Gleiche Merkmale sind mit gleichen Bezugszeichen gekennzeichnet.

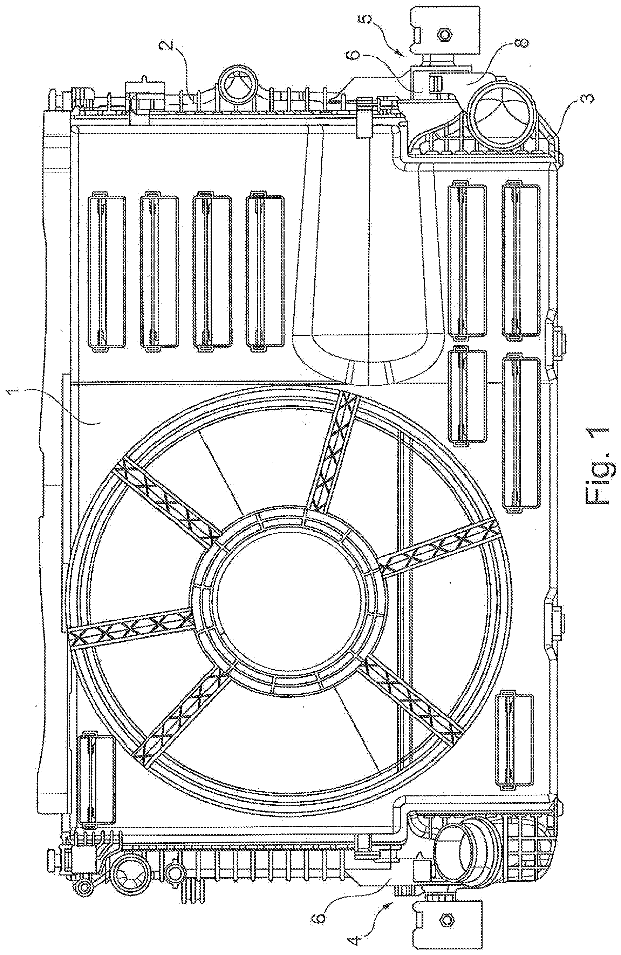

In Figur 1 ist dargestellt, wie zwei Wärmeübertrager, ein Kühlmittelkühler 2 und ein Ladeluftkühler 3 im Fahrzeug verbaut sind. Vor der Kühlmittelkühler 2 und dem Ladeluftkühler 3 ist eine Motorzarge 1 mit einem Lüfter angeordnet. Der Ladeluftkühler 3 und der Kühlmittelkühler 2 sind über zwei Modulhalterungen 4, 5, wovon jeweils eine Modulhalterung 4, 5 an jeder Schmalseite des Blockes angeordnet ist, gelagert. Die Modulhalterungen 4, 5 sind seitlich beabstandet sowohl zum Kühlmittelkühler 2 als auch zum Ladeluftkühler 3 angeordnet. Eine solche Modulhalterung 4, 5 eignet sich nicht nur, um einen Ladeluftkühler 3 an einem Kühlmittelkühler 2 zu befestigen. Sie ist auch geeignet, um eine Umfelddichtung an dem Kühlmittelkühler 2 zu fixieren, welcher für den Einsatz an einen Saugmotor vorgesehen ist.

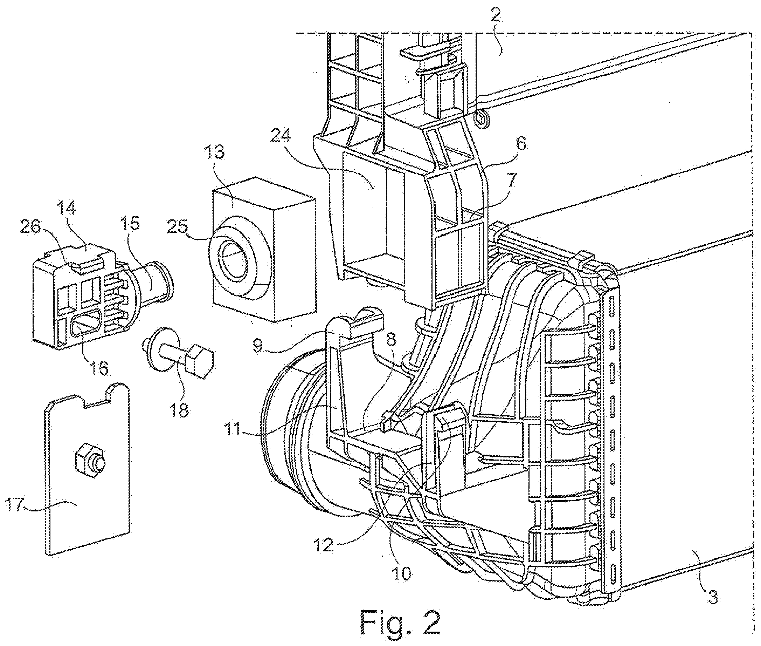

Der konkrete Aufbau einer Modulhalterung ist dabei in Figur 2 dargestellt. Die Modulhalterungen 4, 5 sind identisch aufgebaut, weshalb zunächst nur eine Modulhalterung 4 betrachtet werden soll. Zur Bildung der Modulhalterung 4 umfasst der Kühlmittelkühler 2 einen Vorsprung 6, welcher am Boden des Kuhlmittelkühlers 2 an dessen schmalen Außenseite angeordnet ist. Der Vorsprung 6 überragt dabei den Boden des Kühlmittelkühlers 2. Der Vorsprung 6 weist eine Querrippe 7 an seiner Seitengestaltung auf, während an seiner, der Außenseite des Kühlmittelkühlers 2 abgewandten Seite eine Ausnehmung 24 ausgebildet ist. In diese Ausnehmung 24 ist ein Modullager 13 eingeführt, welches eine Öffnung 25 vorsieht, in welche ein Zapfen 15 eines Kunststoffhalters 14 eingefügt wird.

Der Vorsprung 6, in welchen das Modullager 13 mit dem Kunststoffhalter 14 eingeführt sind, wird in eine Aufnahme 8 eingeschoben, welche an der Schmalseite des Ladeluftkühlers 2 ausgebildet ist. Diese Aufnahme 8 besteht aus zwei hakenähnlichen Elementen 9 und 10, wobei das erste hakenähnliche Element 9 starr ausgebildet ist, welches zur Erhöhung seiner Stabilität mit einer Rippe 11 versehen ist, die sich in Richtung der Längserstreckung des hakenähnlichen Elementes 9 ausdehnt. Das zweite hakenähnliche Element 10 der Aufnahme 8 ist elastisch ausgebildet und bildet einen Schnapphaken.

Der Vorsprung 6 wird entlang des starren hakenähnlichen Elementes 9 mit seiner die Querrippe 7 tragenden Seite über das elastische hakenähnliche Element 10 geschoben, wodurch ein Spalt 12 des elastischen hakenähnlichen Elementes 10 zusammengedrückt wird. Nach der Positionierung des Vorsprungs 6 an dem elastischen hakenähnlichen Element 10 umfasst das elastische hakenähnliche Element 10 die Querrippe 7 des Vorsprungs 6 und der Spalt 12 nimmt wieder seine annähernd ursprüngliche Position ein. Dadurch wird eine feste Verbindung zwischen Kühlmittelkühler 2 und Ladeluftkühler 3 erzeugt.

Da der Kühlmittelkühler 2 als Modulträger für den Ladeluftkühler 3 dient, ist an dem Kunststoffhalter 14 eine Fahrzeugbefestigung 17 verankert, welche den Kühlmittelkühler 2 und indirekt auch den Ladeluftkühler 3 mit dem Fahrzeug verbindet. Die Fahrzeugbefestigung 17 ist im einfachsten Fall als Fixierblech ausgebildet. Der Kunststoffhalter 14 weist ein Langloch 16 auf, in welchem eine Schraube 18, die sowohl durch die Fahrzeugbefestigung 17 als auch durch das Langloch 16 des Kunststoffhalters 14 geführt ist, verschraubt wird. Das Langloch 16 hat dabei den Vorteil, dass Toleranzen quer zur Fahrtrichtung des Fahrzeuges ausgeglichen werden können.

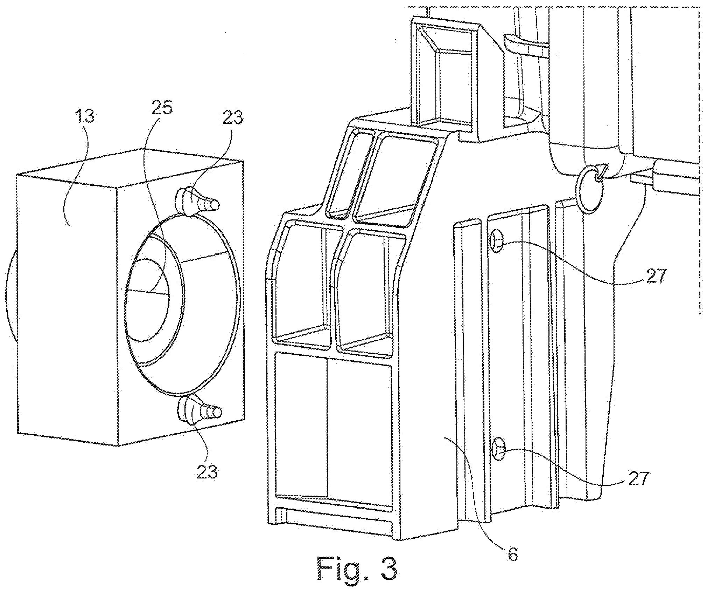

In Figur 3 ist eine vergrößerte Ausgestaltung des Modullagers 13 dargestellt, welches in die Ausnehmung 24 des Vorsprungs 6 des Kühlmittelkühlers 2 eingefügt wird. Dieses Modullager 13 ist als Gummielement ausgebildet und weist auf seiner, dem Kunststoffhalter 14 abgewandten Seite zwei Zapfen 23 auf, welche formschlüssig in dem Vorsprung 6 verankert werden. Die Zapfen 23 greifen dabei in Öffnungen 27 ein, die an einer, die Ausnehmung 24 begrenzenden Wandung des Vorsprungs 6 ausgebildet ist. Im vorliegenden Fall hat das Modullager 13 eine rechteckige Form, welche den Formschluss zwischen dem Modullager 13 und der Ausnehmung 24 begünstigt. Es ist aber auch jede andersgeartete Form der Ausbildung des Modullagers 13 denkbar.

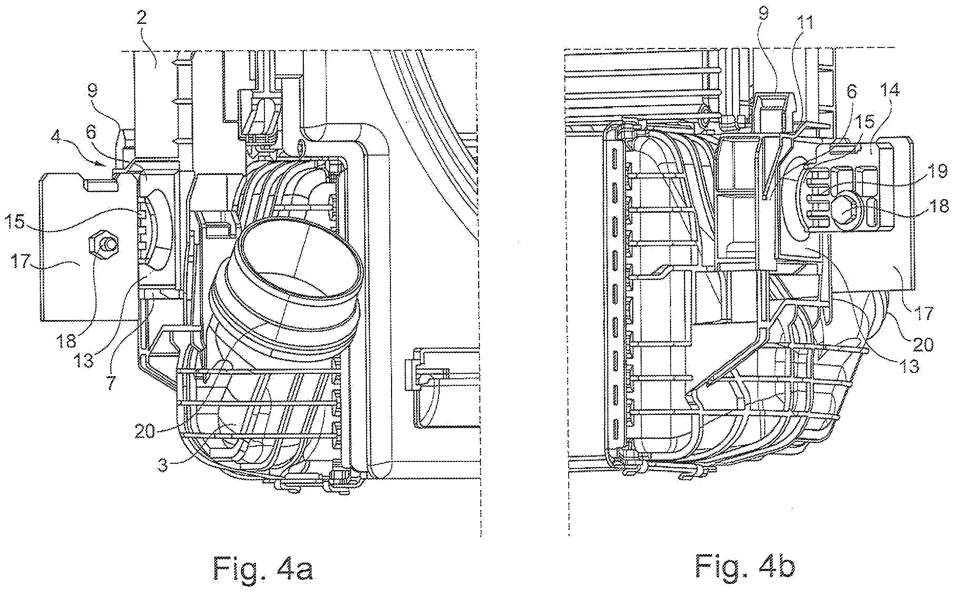

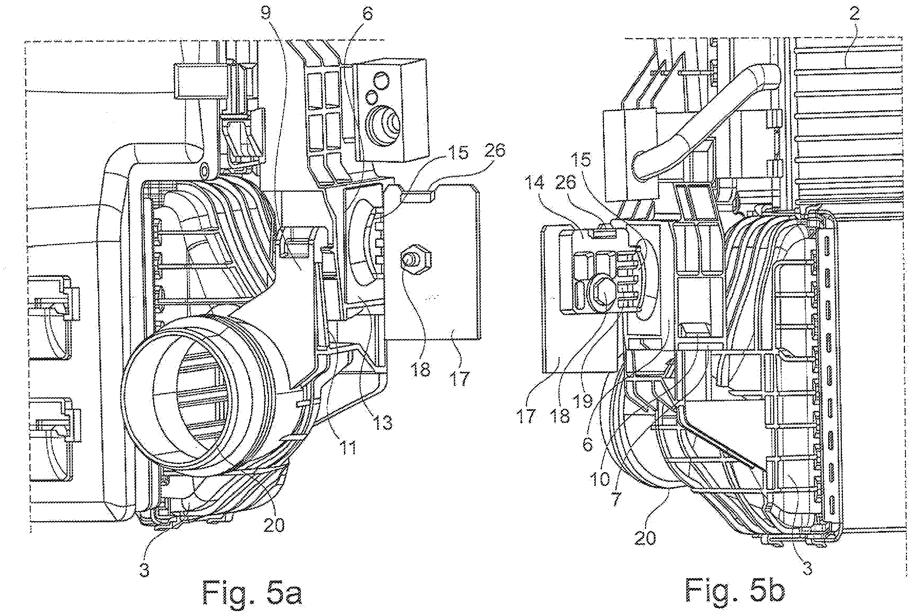

In den Figuren 4 und 5 sind montierte Anordnungen dargestellt, welche den Kühlmittelkühler 2 und Ladeluftkühler 3 miteinander verbinden. Dabei wird in Figur 4 zunächst die Modulhalterung 4 sowohl von einer Vorderseite als auch einer Rückseite gezeigt. Wie aus Figur 4a der Vorderansicht hervorgeht, ist die Modulhalterung 4 beabstandet zu dem Anschlussstutzen 20 des Ladeluftkühlers 3 angeordnet. Der Anschlussstutzen 20 des Ladeluftkühlers 3 ist dabei in seiner ursprünglichen Form beibehalten und die Modulhalterung 4 erstreckt sich in dem freien örtlichen Bereich, der sich aus dieser Anordnung des Anschlussstutzens 20 des Ladeluftkühlers 3 ergibt. Das starre hakenähnliche Element 9 umfasst dabei den Vorsprung 6, in welchem das Modullager 13 eingelegt ist. In das Modullager 13 ist ein Zapfen 15 des Kunststoffhalters 14 eingeführt. Der Kunststoffhalter 14 ist dabei nicht weiter dargestellt, da er von der Fahrzeugbefestigung 17 abgedeckt ist, welche mit Hilfe der Schraube 18 an dem Kunststoffhalter 14 befestigt ist. Das elastische hakenähnliche Element 10 umfasst die Querrippe 7 des Vorsprungs 6.

Eine Ansicht der Rückseite ist der Figur 4b zu entnehmen. Dabei ist ersichtlich, dass der Kunststoffhalter 14 über die Schraube 18 mit der Fahrzeugbefestigung 17 verbunden ist. Der in das Modullager 13 eingeführte Zapfen 15 des Kunststoffhalters 14 weist Querstege 19 auf, mittels welchen dieser mit dem Kunststoffhalter 14 verbunden ist. Vor dem Modullager 13 ist das starre hakenähnliche Element 9 mit der Rippe 11 dargestellt, welches den Vorsprung 6 einklemmt.

Figur 5 zeigt die montierte Modulhalterung 5 in Figur 5a in einer Vorderensicht und in Figur 5b von der Rückseite, In Figur 5a ist die Modulhalterung 5 ebenfalls hinter dem Anschlussstutzen 20 des Ladeluftkühlers 3 angeordnet.

Das starre hakenähnliche Element 9 mit seiner Rippe 11 stabilisiert auch hier den Vorsprung 6, der in die Aufnahme 8 des Ladeluftkühlers 3 eingeführt ist. Der Vorsprung 6 umfasst das Modullager 13, welches den Zapfen 15 des Kunststoffhalters 14 aufgenommen hat. Der Zapfen 15 wird durch die Stege 19 mit dem Kunststoffhalter 14 verbunden. Auch bei dieser Anordnung ist die Fahrzeugbefestigung 17 über die Schraube 18 mit dem nicht weiter ersichtlichen Kunststoffhalter 14 verbunden. Die Fahrzeugbefestigung 17 wird zusätzlich von einer Schnappverbindung 26 umfasst, die, wie aus Figur 5b zu erkennen ist, an dem Kunststoffhalter 14 angeordnet ist.

Figur 5b zeigt weiterhin das elastische hakenähnliche Element 10, welches die Querrippe 7 des Vorsprungs 6 umfasst. Das elastische hakenähnliche Element 10 ist dabei durch die Querrippe 7 des Vorsprungs 6 gegen den Spalt 12 gedrückt und umspannt diese.

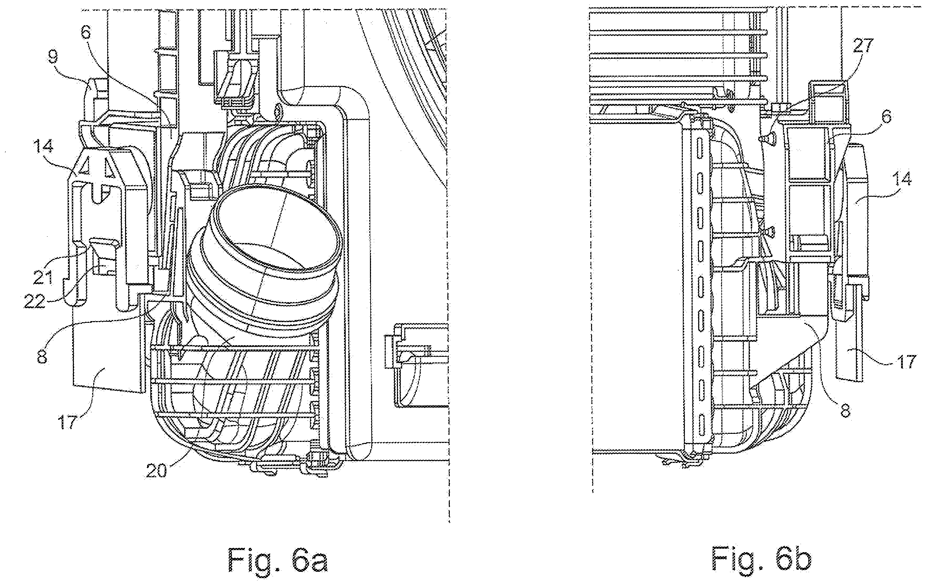

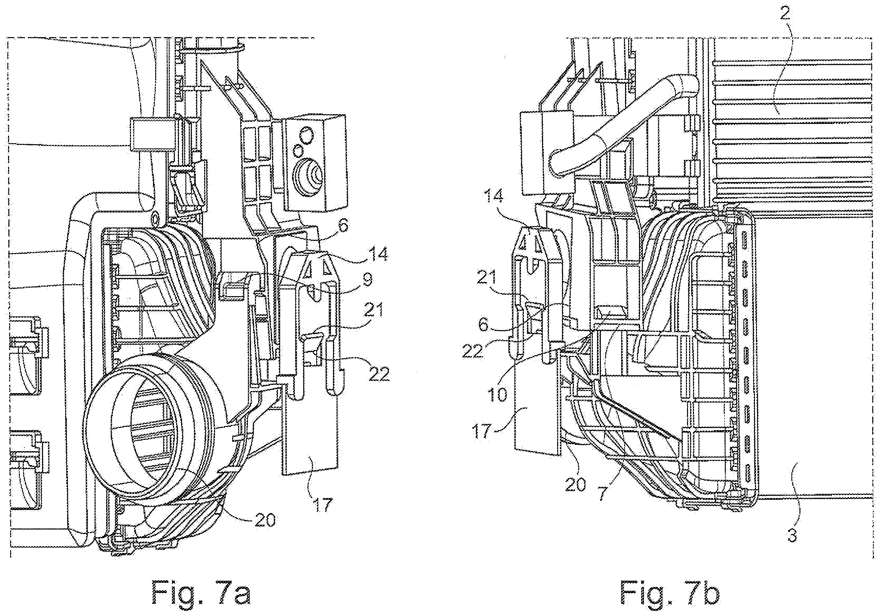

In Figur 6 und 7 ist eine weitere mögliche Ausführung der Anordnung der Fahrzeugbefestigung 17 an dem Kunststoffhalter 14 dargestellt. Figur 6 zeigt diese Verbindung noch einmal für die Modulhalterung 4. Gemäß Figur 6a weist die Fahrzeugbefestigung 17 eine Öffnung 22 auf, in welche ein Schnappverschluss 21 des Kunststoffhalters 14 eingreift. Dabei handelt es sich um eine besonders komfortable und einfache Möglichkeit der Befestigung des als Modulträger ausgebildeten Kühlmitteltauschers 2 an dem Kraftfahrzeug. Um dies zu realisieren, wird die Fahrzeugbefestigung 17 in eine nicht weiter dargestellte Führung des Kunststoffhalters 14 eingefügt, wobei der Schnappverschluss 21 bei der entsprechenden Positionierung in die Öffnung 22 einschnappt. In Figur 6 ist lediglich zu erkennen, dass die Fahrzeugbefestigung 17 aus der Kunststoffhalterung 14 herausragt. Alle weiteren Elemente der Modulhalterung 4 sind dabei unverändert.

Eine vergleichbare Anordnung ergibt sich für die Modulhalterung 5, welche in Figur 7 dargestellt ist. Auch hier ist das Fahrzeugfixierblech 17 in den Kunststoffhalter 14 eingehängt und der Schnappverschluss 21 des Kunststoffhalters 14 schiebt sich beim Einschieben der Fahrzeugbefestigung 17 in die Öffnung 22 der Fahrzeugbefestigung 17. Der Vorsprung 6 der Modulhalterung 5 wird von dem starren hakenähnlichen Element 9 gehalten, was in Figur 7a dargestellt ist, während in Figur 7b das elastische hakenähnliche Element 10 die Querrippe 7 des Vorsprunges 6 umfasst. Auch bei dieser Darstellung sind keine weiteren Veränderungen an der Modulhalterung 5 in Bezug auf die vorangegangenen Ausführungen vorgenommen.

## Patentansprüche

1. Anordnung umfassend einen Wärmeübertrager (2), eine weitere Komponente, insbesondere ein weiterer Wärmeübertrager (3), und eine Modulhalterung (4, 5), wobei der Wärmeübertrager (2) mit der weiteren Komponente (3) über die Modulhalterung (4, 5) verbunden ist, wobei die am Wärmeübertrager (2) angeordnete Modulhalterung (4, 5) vom Wärmeübertrager (2) weg gerichtet ausgebildet ist, wobei die Modulhalterung (4, 5) als Vorsprung (6) des Wärmeübertragers (2) ausgebildet ist, wobei der den Wärmeübertrager (2) überragende Vorsprung (6) in eine, an der weiteren Komponente (3) ausgebildeten Aufnahme (8) eingreift, die Aufnahme (8) der weiteren Komponente (3) den Vorsprung (6) mit mindestens zwei hakenähnlichen Elementen (9, 10) umfasst, **dadurch gekennzeichnet, dass** die weitere Komponente (3) durch die mindestens zwei hakenähnlichen Elemente (9, 10) direkt vor und in dem Vorsprung (6) in Wirkrichtung von, auf die weitere Komponente (3) wirkenden Kräften befestigt ist, wobei das erste hakenähnliche Element starr ausgebildet ist und an einer Seite des Vorsprungs anliegt und das zweite hakenähnliche Element (10) elastisch ausgebildet ist, welches eine, an dem Vorsprung (6) des Wärmeübertragers (2) ausgebildete Querrippe (7) annähernd umfasst.

2. Anordnung nach Anspruch 1, **dadurch gekennzeichnet, dass** das erste hakenähnliche Element (9) mittels einer, sich in seiner Längserstreckung ausdehnenden Rippe (11) stabilisiert ist.

3. Anordnung nach mindestens einem der vorhergehenden Ansprüche 1 oder 2, **dadurch gekennzeichnet, dass** der Vorsprung (6) eine Ausnehmung (24) aufweist, in welche ein Modullager (13), vorzugsweise formschlüssig, eingreift.

4. Anordnung nach Anspruch 3, **dadurch gekennzeichnet, dass** das Modullager (13), welches vorzugsweise als Gummielement ausgebildet ist, einen zur Verbindung mit einer Fahrzeugbefestigung (17) dienenden Kunststoffhalter (14) aufnimmt, welcher insbesondere Mittel (16, 26) zum Verschrauben oder Verclipsen mit der Fahrzeugbefestigung (17) aufweist.

5. Anordnung nach Anspruch 4, **dadurch gekennzeichnet, dass** der Kunststoffhalter (14) zur Ausführung der Schraubverbindung ein Langloch (16) aufweist.

## Claims

1. An arrangement, comprising a heat exchanger (2), a further component, in particular a further heat exchanger (3), and a module retainer (4, 5), wherein the heat exchanger (2) is connected to the further component (3) via the module retainer (4, 5), wherein the module retainer (4, 5) arranged on the heat exchanger (2) is formed in a direction away from the heat exchanger (2), wherein the module retainer (4, 5) is formed as a projection (6) of the heat exchanger (2), wherein the projection (6) protruding beyond the heat exchanger (2) engages a reception (8) formed on the further component (3), wherein the reception (8) of the further component (3) embraces the projection (6) with at least two hook-like elements (9, 10), **characterised in that** the further component (3) is fixed in the effective direction of forces acting on the further component (3) by means of the at least two hook-like elements (9, 10) directly in front of and within the projection (6), wherein the first hook-like element is formed in a rigid manner and lies against a side of the projection and the second hook-like element (10) is formed in an elastic manner and nearly embraces a transverse rib (7) formed on the projection (6) of the heat exchanger (2).

2. The arrangement according to claim 1, **characterised in that** the first hook-like element (9) is stabilised by means of a rib (11) extending in its longitudinal extension.

3. The arrangement according to at least one of the preceding claims 1 or 2, **characterised in that** the protrusion (6) has a recess (24) which is engaged by a module bearing (13), preferably in a form-fit manner.

4. The arrangement according to claim 3, **characterised in that** the module bearing (13), which is preferably formed as a rubber element, accepts a plastic holder (14) which serves for the connection to a vehicle fastening (17) and which in particular has means (16, 26) to screw or clip on the vehicle fastening (17).

5. The arrangement according to claim 4, **characterised in that** the plastic holder (14) has an elongated hole (16) for performing the screw connection.

## Revendications

1. Agencement comprenant un échangeur de chaleur (2), un autre composant, en particulier un autre échangeur de chaleur (3), et un support de module (4, 5), où l'échangeur de chaleur (2) est relié à l'autre composant (3) par le support de module (4, 5), où le support de module (4, 5) disposé sur l'échangeur de chaleur (2) est configuré en étant éloigné de l'échangeur de chaleur (2), où le support de module (4, 5) est configuré comme une partie saillante (6) de l'échangeur de chaleur (2), où la partie saillante (6) dépassant de l'échangeur de chaleur (2) s'emboîte dans un logement (8) configuré sur l'autre composant (3), où le logement (8) de l'autre composant (3) comprend la partie saillante (6) ayant au moins deux éléments (9, 10) en forme de crochet, **caractérisé en ce que** l'autre composant (3) est fixé par les éléments (9, 10) en forme de crochet, au moins au nombre de deux, directement en amont de la partie saillante (6) et dans celle-ci, dans la direction d'action de forces agissant sur l'autre composant (3), où le premier élément en forme de crochet est configuré en étant rigide et vient en appui sur un côté de la partie saillante, le second élément (10) en forme de crochet étant configuré de façon élastique, second élément qui comprend approximativement une nervure transversale (7) configurée sur la partie saillante (6) de l'échangeur de chaleur (2).

2. Agencement selon la revendication 1, **caractérisé en ce que** le premier élément (9) en forme de crochet est stabilisé au moyen d'une nervure (11) s'étendant suivant la dimension longitudinale dudit premier élément.

3. Agencement selon au moins l'une des revendications précédentes 1 ou 2, **caractérisé en ce que** la partie saillante (6) présente une cavité (24) dans laquelle un support modulaire (13) s'emboîte, de préférence par complémentarité de forme.

4. Agencement selon la revendication 3, **caractérisé en ce que** le support modulaire (13), qui est configuré de préférence comme un élément en caoutchouc, loge un support (14) en matière plastique servant à l'assemblage avec une fixation de véhicule (17), support en matière plastique qui présente en particulier des moyens (16, 26) lui permettant d'être vissé ou clipsé pour l'assemblage avec la fixation (17) du véhicule.

5. Agencement selon la revendication 4, **caractérisé en ce que** le support (14) en matière plastique présente un trou oblong (16) prévu pour la réalisation de l'assemblage vissé.
